# FASCICULE DE BREVET EUROPEEN

(11) **EP 1 900 269 B1**
(45) Date de publication et mention de la délivrance du brevet: **26.01.2011**
(21) Numéro de dépôt: 07116021.2
(22) Date de dépôt: 10.09.2007
(51) Int. Cl.: A01B 15/06

(54) **Pièce d'usure et sa fixation, corps de labour et charrue comportant une telle pièce d'usure**
Verschleissstück und seine Befestigung, Pflugkörper und Pflug, die ein solches Verschleissstück umfassen
Wearing part and its fixing, plough body and plough comprising such a wearing part

(30) Priorité: 13.09.2006 FR 0653711
(43) Date de publication de la demande: 19.03.2008
(73) Titulaire: Kuhn-Huard S.A., 44142 Châteaubriant (FR)
(72) Inventeur: Renault, Christophe, 35230 Bourgbarre (FR); Cueille, Laurent, 44110 Erbray (FR); Toublanc, Sylvian, 44110 Chateaubriant (FR); Masse, Pierre, 44520 Isse (FR)
(74) Mandataire: Andres, Jean-Claude

(56) Documents cités:
- WO-A-01/56360
- DE-A1- 2 655 792
- DE-A1- 3 718 819
- US-A- 1 327 921
- US-A- 1 827 170
- US-A- 2 036 102
- US-A- 3 068 945

## Description

La présente invention concerne un outil de travail qui est protégé, d'une usure importante, par une pièce d'usure. Ainsi, la présente invention trouvera son application dans les machines agricoles, les engins de travaux publics et, de manière générale, dans le domaine des matériels destinés à travailler le sol. D'une manière particulière, la présente invention concerne également un corps de labour comportant un outil selon l'invention ainsi qu'une charrue comportant au moins un corps de labour.

La présente invention se rapporte ainsi à un outil protégé par une pièce d'usure, ladite pièce d'usure présentant une partie active et une partie de liaison, ledit outil présente une partie frontale comportant à l'avant une rainure disposée transversalement, ladite rainure est symétrique par rapport à son axe longitudinal.

Il est connu pour un tel outil qui travaille dans le sol que le contact répété avec le sol engendre une usure par abrasion de la partie frontale. Cette usure est concentrée surtout à l'avant de l'outil compte tenu de la direction d'avance au travail. Pour retrouver des conditions idéales de travail, il est nécessaire de remplacer fréquemment l'outil. Les remplacements fréquents de l'outil engendrent des coûts et des temps d'immobilisation relativement longs. De ce fait, il est courant de protéger l'outil par une pièce d'usure. Les temps d'intervention et les coûts de maintenance sont alors considérablement réduits. La pièce d'usure est fixée sur l'outil à l'aide de boulons dans la zone où se produit l'usure. Un tel mode de fixation engendre très souvent des difficultés de démontage compte tenu de l'usure par abrasion des boulons en particulier des écrous.

Prenant ces difficultés en considération, le document WO 01/56360 propose un outil de travail tel qu'un soc qui est protégé par une pièce d'usure, appelée pointe. La pointe présente une partie active qui est destinée à être usée et une partie de liaison qui est destinée à être fixée sur le soc. La pointe est montée au niveau de la partie frontale du soc au moyen d'une liaison glissière. Le soc présente à cet effet dans sa partie frontale, une rainure de guidage ouverte, convergente qui est transversale. La rainure est symétrique par rapport à son axe longitudinal. Pour le montage de la pointe sur le soc, la partie de liaison est engagée dans la rainure dans le sens opposé à la direction de travail. Le pivotement de la pointe autour de son axe longitudinal est verrouillé par la forme complémentaire en V de la partie de liaison et de la rainure. Le maintien de la pointe dans la rainure est obtenu par le frottement des surfaces complémentaires en V de la partie de liaison et de la rainure qui convergent. Ce coincement par frottement de la pointe est augmenté par un coup de marteau, dans le sens opposé à la direction de travail, sur la partie active. La pointe est alors bloquée sur le soc.

Pour garantir un bon maintien de la fixation, il faut que la partie de liaison de la pointe ainsi que la partie frontale du soc présentent une épaisseur assez importante. Les surfaces en V doivent être réalisées dans cette épaisseur supplémentaire. Mais, cette épaisseur supplémentaire pénalise d'une part la pénétration dans la terre de la pointe à mi-usure et pénalise d'autre part le ratio de masse d'acier usable par rapport à la masse de la pointe neuve. On constate au cours du labour qu'en plus de l'usure de la pointe, la partie frontale du soc avec la rainure est également altérée par le frottement de la terre. Par ailleurs, le blocage de la pointe dans l'épaisseur du soc implique une zone morte au fond de la rainure, cette zone morte n'est pas recouverte. La terre vient alors combler la zone morte apparente et provoque une bande de collage de terre qui a pour conséquence une usure prononcée des pièces. Une telle fixation, pour laquelle la partie de liaison doit être disposée dans le prolongement de la partie active, ne permet pas l'utilisation de pointe réversible.

Le document US 1 827 170 se rapporte à un outil de travail protégé par une pièce d'usure. La pièce d'usure présente une forme en biseau complémentaire à celle de l'outil de travail. Le biseau permet de guider le montage de la pièce d'usure sur l'outil de travail et un boulon permet de la fixer sur l'outil.

La présente invention a pour but de remédier aux inconvénients précités. La pièce d'usure devra mieux protéger l'outil contre l'usure tout en favorisant l'écoulement de la terre même lorsqu'elle est plus ou moins altérée. La fixation de la pièce d'usure sur l'outil doit être facile à mettre en oeuvre, rapide et efficace du point de vue de la tenue dans le temps.

A cet effet, une importante caractéristique de l'invention consiste en ce que ladite pièce d'usure est fixée sur ledit outil par coincement par l'intermédiaire d'un moyen de fixation, ledit moyen de fixation reliant la pièce d'usure à l'outil est destiné à être engagé dans ladite rainure par coincement, que ledit moyen de fixation présente une surface d'appui et que lorsque la pièce d'usure est montée sur l'outil de travail, ladite surface d'appui n'est plus en contact avec ledit outil de travail.

L'invention a aussi pour objet un corps de labour comportant notamment un soc de charrue protégé par une pointe caractérisé en ce que le soc correspond audit outil et que la pointe correspond à ladite pièce d'usure.

L'invention a également pour objet une charrue caractérisée en ce qu'elle comporte au moins un corps de labour du type précité.

D'autres caractéristiques et avantages de l'invention ressortiront des revendications et de la description ci-après des exemples de réalisation non limitatifs de l'invention avec référence aux dessins annexés dans lesquels :
- la **figure 1** représente un corps de labour dont le soc est équipé d'une pointe selon l'invention,
- la **figure 2** représente une vue de dessus en éclaté d'un outil de travail selon l'invention,
- la **figure 3** est une vue de dessous d'un outil de travail selon l'invention,
- la **figure 4** représente une vue de face de la figure 1,
- la **figure 5** est une vue en coupe suivant V de la figure 3,
- la **figure 6** est une vue en coupe suivant VI de la figure 3,
- la **figure 7** représente une vue de dessus en éclaté d'un autre outil de travail selon l'invention,
- la **figure 8** est une vue en coupe de l'outil de travail de la figure 7.

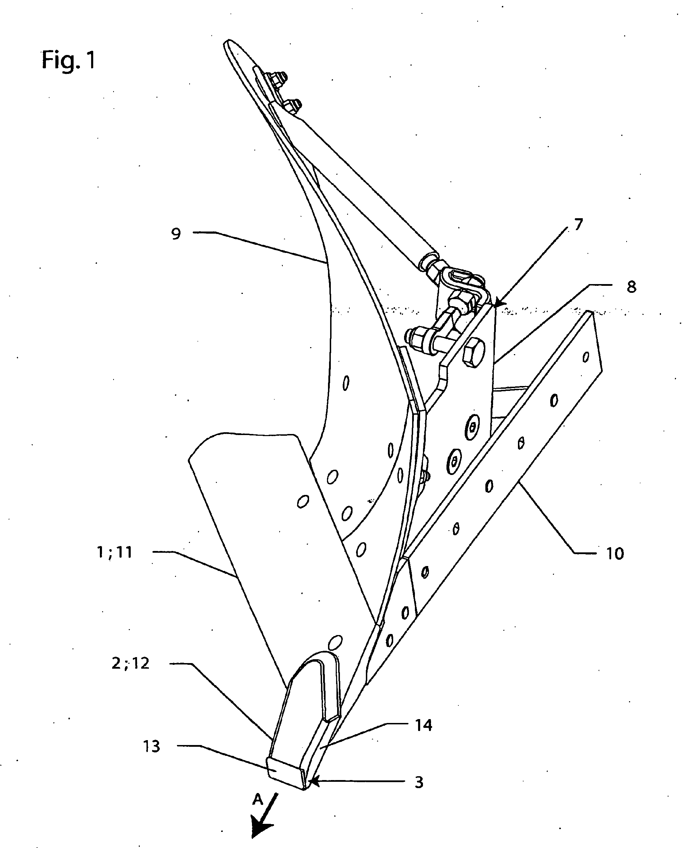

La figure 1 représente, selon un exemple de réalisation préféré, un corps de labour (7). Ce corps de labour (7) comporte un sep (8) sur lequel sont fixés un versoir (9), un contresep (10) et un soc (11). Le sep (8) est, quant à lui, la pièce centrale du corps de labour (7), car c'est sur celui-ci que viennent se fixer les autres pièces principales : le versoir (9), le contresep (10) et le soc (11). Le contresep (10) glisse sur le fond du sillon et sur la muraille lorsque la charrue avance et le soc (11) découpe la terre horizontalement. La bande découpée est alors soulevée par le soc (11) et est retournée par le versoir (9). La partie verticale de la bande de terre est, quant à elle, découpée par un aileron coutre (non représenté).

Le soc (11) découpe ou tranche une bande de terre qui est ensuite retournée par un versoir (9) lors du déplacement d'une charrue (non représentée). D'une manière connue, le soc (11) est cambré pour faciliter le soulèvement de la bande de terre. Il peut être réalisé en une seule ou plusieurs partie(s). Etant en contact avec la terre, il est donc fortement soumis à l'usure. Le mouvement relatif de la terre sur le soc (11) et la pression importante du sol sur le soc (11) génèrent une usure par abrasion. Pour éviter ce phénomène, le soc (11) est protégé par une pointe de soc (12). Cette pointe de soc (12) est amovible et interchangeable. La pointe (12) permet au corps de labour (7) de pénétrer dans le sol, cette opération défonce la terre devant le soc (11) dans une direction de travail (A) et protège le soc (11) de l'effet d'abrasion dans la partie frontale (5) où celui-ci est soumis à l'usure la plus importante et la plus rapide. Cette pointe (12) permet de prolonger la durée de vie du soc (11). De manière généralement connue, la pointe (12) est légèrement vrillée et cambrée pour respecter les angles caractéristiques de travail.

La pointe (12) comporte une partie active (3) qui présente avantageusement deux tranchants (13, 14) destinés à couper la terre. Un tranchant frontal (13) est disposé sur l'arête frontale et un tranchant latéral (14) est disposé sur l'arête latérale. Ces deux tranchants (13, 14) forment un angle d'environ 80° l'un par rapport à l'autre. La pointe (12) est montée de façon à ce que le tranchant latéral (14) soit parallèle à la muraille de la raie de labour. Lorsque la partie active (3) de la pointe (12) est usée, il faut remplacer la pointe usagée par une pointe neuve. La pointe (12), représentée à la figure 1, n'est pas réversible.

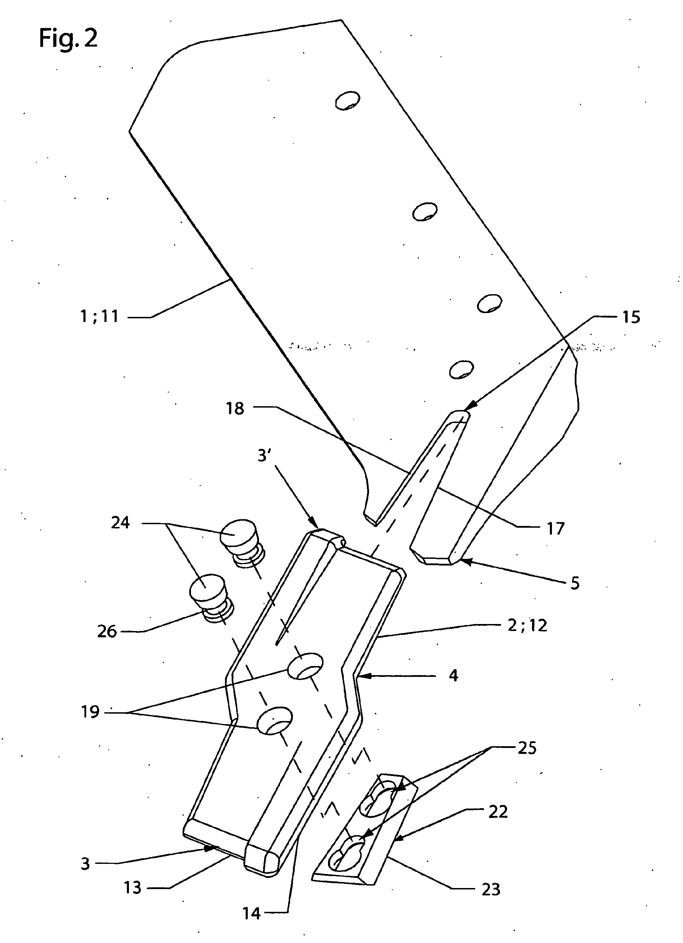

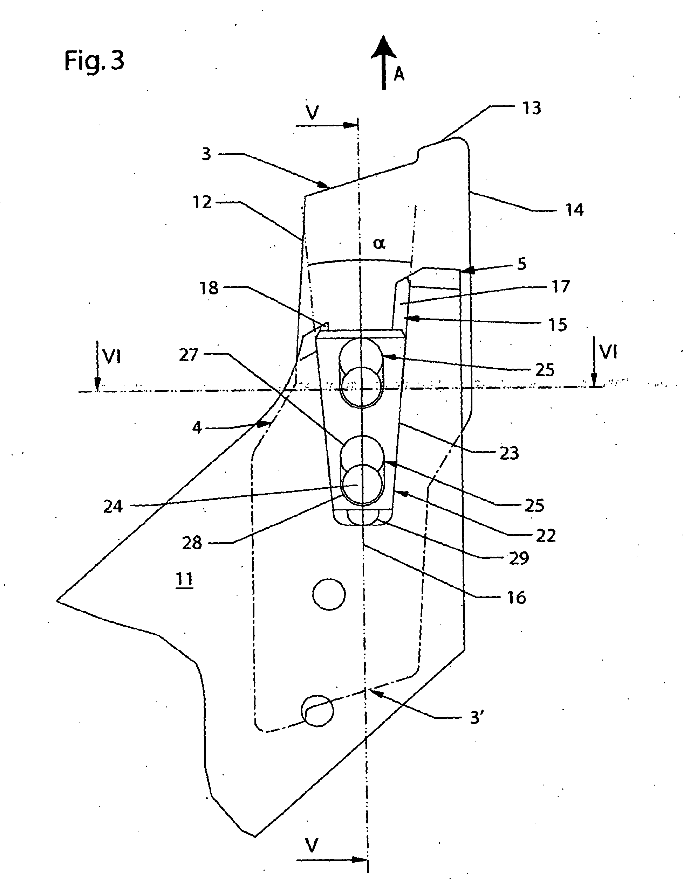

La figure 2 est une représentation éclatée d'un soc (11) et d'une pointe (12) selon une vue de dessus. La pointe (12) comporte, en plus de la partie active (3), une partie de liaison (4) qui permet de la fixer sur le soc (11). La partie de liaison (4) est destinée à venir en contact avec le soc (11). Le soc (11) présente à cet effet une rainure (15) longitudinal de guidage d'axe longitudinal (16). Sur la figure 3, illustrant la fixation selon une vue de dessous, la rainure (15) est ménagée dans la partie frontale (5) du soc (11). La rainure (15) est symétrique par rapport à son axe longitudinal (16), elle est disposée transversalement par rapport au soc (11). La rainure (15) est convergente dans le sens longitudinal et se resserre au fur et à mesure qu'elle s'éloigne de l'extrémité du soc (11). Elle est orientée d'un premier angle (α) compris entre 5° et 15°.

Selon une importante caractéristique de l'invention, ladite pièce d'usure (2 ; 12) est fixée sur ledit outil (1 ; 11) par l'intermédiaire d'un moyen de fixation (22), ledit moyen de fixation (22) reliant la pièce d'usure (2 ; 12) à l'outil (1 ; 11) est destiné à être engagé dans ladite rainure (15). La fixation est donc rapide et facile à mettre en oeuvre. Pour cela le moyen de fixation (22) présente avantageusement une première partie (23) et une seconde partie (24). La première partie (23) présente une forme complémentaire à la forme de la rainure (15) de l'outil (1 ; 11) et la seconde partie (24) est destinée à être montée dans la pièce d'usure (2 ; 12). La première partie (23) est de forme convergente selon le premier angle (α). Cette forme convergente facilite l'engagement du moyen de fixation (22) dans la rainure (15). La pièce d'usure (2 ; 12) présente au moins une découpe (19) permettant la liaison avec l'outil (1 ; 11). La seconde partie (24) présente une forme complémentaire à la découpe (19). Dans le premier exemple de réalisation représenté dans les figures 1 à 6, la pièce d'usure (2; 12) dispose de deux découpes (19) correspondant à deux perçages coniques.

La rainure (15) présente deux parois latérales (17, 18) inclinées par rapport à la verticale de manière à former ensemble un V avec une convergence vers l'avant compte tenu de la direction de travail (A). Les deux faces (17, 18) de la rainure (15) sont avantageusement inclinées l'une par rapport à l'autre d'un deuxième angle (β). Ce deuxième angle (β) est compris entre 10° et 70°. De cette manière, la pointe (12) avec le moyen de fixation (22) est guidée sur le soc (11) grâce aux parois latérales (17, 18). La pointe (12) est serrée sur le soc (11) au fur et à mesure qu'elle s'introduit dans la rainure (15) convergente. La translation de la pointe (12) par rapport au soc (11) dans la rainure (15) convergente est bloquée par serrage. La rainure (15) avec ses faces inclinées (17, 18) bloque ainsi la rotation du moyen de fixation (22) autour de son axe longitudinal. Le plan vertical médian du moyen de fixation (22) est ainsi sensiblement parallèle et même sensiblement confondu au plan vertical médian de la rainure (15) passant par l'axe longitudinal (16). Les faces inclinées (17, 18) assurent une bonne répartition des pressions de contact pour la fixation.

Dans le premier exemple de réalisation, la première et la seconde parties (23, 24) sont deux pièces distinctes. La première partie (23) présente une forme de coin. Elle comporte au moins un perçage longitudinal en forme de boutonnière (25). La seconde partie (24) est destinée à coopérer avec le perçage en forme de boutonnière (25). De préférence, la première partie (23) comporte deux perçages en forme de boutonnière (25) et la seconde partie (24) est constituée de deux pions. Chaque pion comporte une gorge (26) qui va s'engager dans la boutonnière (25) correspondante lors du montage. Le pion comporte une surface d'appui (30) sensiblement à la jonction entre sa tête et la gorge (26). L'axe longitudinal des perçages en forme de boutonnière (25) est sensiblement parallèle à la direction de travail (A) et est sensiblement parallèle même confondu avec le plan vertical médian de la rainure (15) passant par l'axe longitudinal (16). Les figures 3, 5 et 6 illustrent plus en détail la fixation et les perçages en forme de boutonnière (25). On remarque que les perçages en forme de boutonnière (25) présentent avantageusement deux zones : une zone d'entrée (27) et une zone de maintien (28). La zone d'entrée (27) autorise l'introduction du pion dans le perçage et la zone de maintien (28) permet le maintien du pion dans la boutonnière (25), et ceci grâce à la gorge (26). La zone de maintien (28) présente une forme complémentaire à la hauteur et au diamètre de la gorge (26). La zone d'entrée (27) est disposée devant la zone de maintien (28) compte tenu de la direction de travail (A).

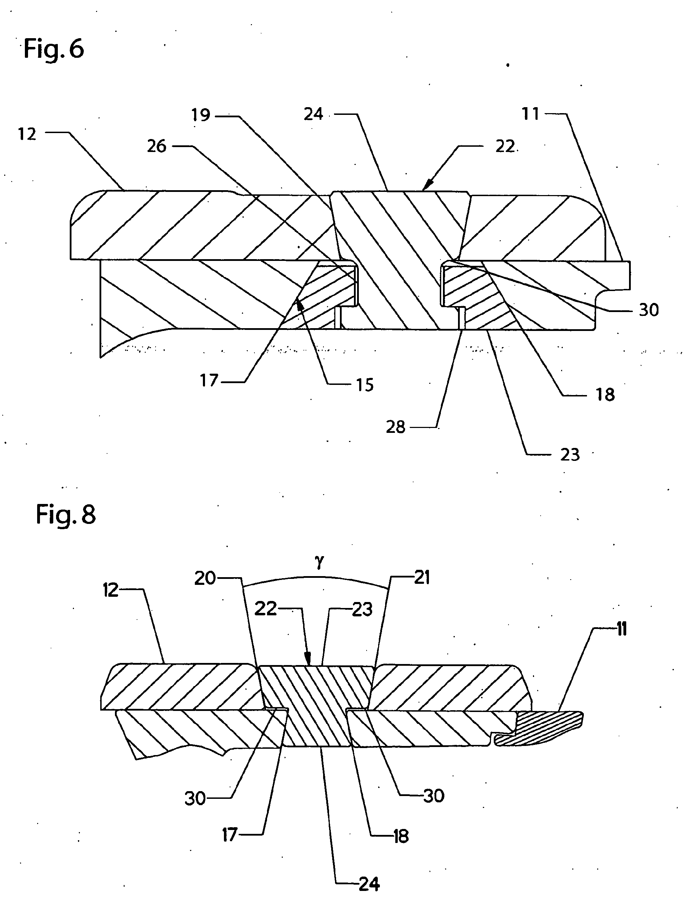

Selon une importante caractéristique de l'invention, ladite pointe (12) est fixée sur le soc (11) par l'intermédiaire d'un dispositif de maintien composé de deux parties (23, 24). La deuxième partie (24), ici le pion, vient se loger dans la pointe (12) et le pion vient s'insérer dans la première partie (23), notamment la boutonnière (25) ménagée dans le coin. Puis, l'ensemble glisse dans ladite rainure (15) jusqu'au blocage. La fixation d'une pointe (12) sur un soc (11) est donc facile à mettre en oeuvre. On remarque que le soc (11) n'est pas directement en contact avec la seconde partie (24) du moyen de fixation (22) (figure 6). Le pion réuni la pointe (12) et le coin grâce à la boutonnière (25). Le coin est destiné à coopérer, à s'insérer dans la rainure (15) ménagée dans le soc (11).

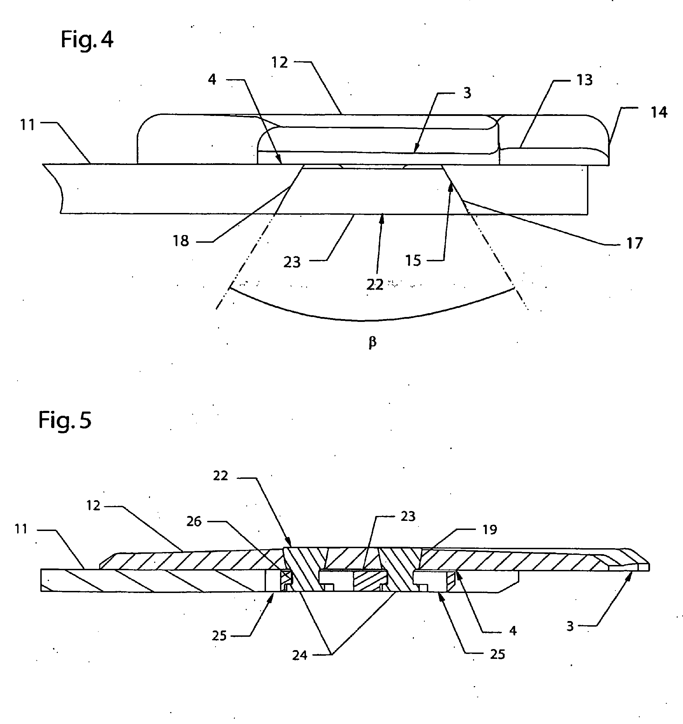

D'après les figures 5 et 6, la seconde partie (24) ou le pion comporte une tête fraisée. Cette tête fraisée est avantageusement noyée dans le perçage conique de la pointe (12). L'écoulement de la terre lors du travail n'est pas gêné et le pion n'est pas détérioré par les frottements de la terre. La pointe (12) comporte ainsi deux perçages coniques sans méplat ménagés dans le plan vertical médian de la pointe (12). Ils sont avantageusement disposés dans un plan sensiblement parallèle au tranchant latéral (14) de la pointe (12). Le plan vertical médian de la pointe (12) est sensiblement confondu avec le plan vertical médian de la rainure (15) passant par l'axe longitudinal (16) dans l'exemple de réalisation de la figure 3. De par le type de fixation utilisé, il n'est pas nécessaire de bloquer la rotation des pions dans leur logement respectif. Le pivotement de la pointe (12) autour de son axe normal est supprimé par l'utilisation de deux pions selon l'exemple de réalisation représenté.

Selon un autre exemple de réalisation non représenté, les deux éléments bloquant la rotation de la pointe (12) sont la combinaison d'un pion, tel que décrit précédemment, et d'un index. L'index réalise un repère qui sert au réglage de la position de la pointe (12) sur le soc (11). Ainsi la position de la pointe (12) est bien définie sur le soc (11).

L'invention concerne également une pointe (12) comportant de manière alternative, une seconde partie (24) directement prévu sous la pointe (12) au niveau de la partie de liaison (4). Dans ce cas, la seconde partie (24) est avantageusement réalisée sous la forme d'embout. Pour verrouiller la rotation de la pointe (12) autour de son axe normal, il est avantageusement prévu deux embouts. Ces embouts peuvent être, soit rapportés par soudage, ou soit obtenus en même temps que la fabrication de la pointe (12). Chaque embout comporte une gorge (26) destinée à s'engager dans la boutonnière (25) correspondante lors du montage. Dans les deux cas, la surface de la pointe (12) destinée à être en contact avec la terre s'affranchit de la découpe (19), ainsi il n'y a pas d'accumulation de terre. La pointe (12) représentée sur la figure 1 ne comporte pas de découpe (19).

La fixation de la pointe (12) sur le soc (11) comprend deux étapes. Dans une première étape, les deux pions sont insérés dans les perçages de la pointe (12), chaque tête fraisée est logée dans le perçage conique correspondant. Les pions sont alors introduits dans la zone d'entrée (27) du perçage en forme de boutonnière (25) du coin. Lorsque la gorge (26) de chaque pion arrive en face de la zone de maintien (28), on fait coulisser le coin pour que les gorges (26) coopèrent avec la zone de maintien (28) respective. De cette manière, la seconde partie (24) est réunie à la première partie (23). La deuxième étape consiste à fixer cet assemblage, pointe (12) - pion - coin, sur le soc (11). Pour cela, il faut insérer le coin dans la rainure (15). Le placement du coin par rapport à la rainure (15) est guidé avantageusement par les parois latérales (17, 18) de la rainure (15). Pour assurer le montage, l'assemblage est serré et bloqué sur le soc (11) par un coup de marteau. D'une manière avantageuse, l'utilisation des parois latérales (17, 18) pour bloquer la pointe (12) sur le soc (11) permet de s'affranchir des défauts de forme et de corriger les écarts géométriques résultants de la fabrication.

Les gorges (26) permettent un blocage en translation du coin. Compte tenu de la disposition des boutonnières (25), la zone d'entrée (27) étant disposée devant la zone de maintien (28), une translation dans le sens opposé à la direction de travail (A) de la pointe (12) entraîne un déplacement du coin vers l'arrière. Le recul du moyen de fixation (22) dans la rainure (15) génère un soulèvement du coin suivant les parois latérales (17, 18) du deuxième angle (β). Ce soulèvement est transmit aux pions qui exercent un effort de traction sur la pointe (12). Cet effort de traction plaque alors la pointe (12) sur le soc (11). Lorsque la pointe (12) est montée, les surfaces d'appui (30) des pions ne sont plus en contact avec le soc (11). La forme complémentaire de la rainure (15) et du coin, combinée au pion et à la boutonnière (25), bloque tous les mouvements de translation et de rotation selon les trois axes de référence (x, y, z) de la pointe (12). La fixation est donc facile à mettre en oeuvre, rapide et durable. Grâce à cette fixation, le blocage de la pointe (12) est avantageusement progressif lors du travail.

On remarque également la présence d'une zone morte (29) à l'extrémité convergente de la rainure (15). Cette zone morte (29) correspond à un espace vide. Grâce à la zone morte (29), l'extrémité du coin ne vient jamais en contact avec l'extrémité convergente de la rainure (15). La zone morte (29) permet un blocage efficace du coin dans la rainure (15) et par conséquent de la pointe (12) sur le soc (11). Lorsque la pointe (12) est ainsi bloquée, la fixation peut faire face aux efforts de travail mais aussi aux chocs divers pouvant être générés par des éléments comme des pierres.

Plus le labour se déroule dans des conditions difficiles, plus il est important de bien maintenir des pièces. Ces conditions difficiles (terres lourdes, nombreuses pierres, chocs, ...) se traduisent par des efforts importants sur les corps de labour (7) et les pièces d'usure (2). Une partie de ces efforts importants est utilisée pour bloquer la pointe (12) sur le soc (11).

D'une manière particulièrement avantageuse, le coincement de la pointe (12) sur le soc (11) est augmenté par les efforts de travail au cours du labour. Comme l'axe de la rainure c'est-à-dire la liaison glissière entre la rainure (15) et la première partie (23), est sensiblement parallèle à la direction de travail (A), les efforts sur la pointe (12) sont dirigés dans le sens opposé à la direction de travail (A). Ces efforts sont donc dirigés dans le sens du coincement du moyen de fixation (22) dans la rainure (15).

La figure 2 illustre une autre pièce d'usure (2). Il s'agit, dans cet exemple de réalisation, d'une pointe réversible, elle est susceptible d'être montée sur le soc (11) selon deux orientations à 180° l'une de l'autre. Cette pointe réversible présente deux parties actives (3, 3') opposées, elle présente une forme parallélépipédique. De cette manière lorsque la première partie active (3) est usée, la pointe réversible est inversée de manière à pouvoir utiliser la seconde partie active (3'). Avec une telle pointe réversible, le rapport de la masse d'acier usable sur la masse d'acier totale d'une pointe neuve est supérieur à 50%. Avec une pointe réversible, le recouvrement de la zone morte (29), par la partie active (3, 3'), qui n'est pas en service, est optimal et empêche la pénétration de la terre dans la zone morte (29) entre le moyen de fixation (22) et la rainure (15).

Selon une autre caractéristique importante de l'invention, dans la première partie (23) : le coin s'étend en dessous de la partie active (3) de la pointe (12). De cette manière, la fixation de la pointe (12) est protégée du contact direct avec la terre et donc de l'usure. La fixation selon l'invention assure donc une bonne tenue dans le temps de la pointe (12) sur le soc (11). D'après la figure 4, représentant une vue de face, la liaison glissière réalisée par la rainure (15) et le coin reste sensiblement dans l'épaisseur du soc (11). De ce fait, elle ne sera pas usée par frottement de la terre et le contact entre le coin et la rainure (15) ne sera pas altéré. De plus, la pointe (12) ne perd pas ses capacités de pénétration en terre car l'épaisseur de la partie active (3) reste constante, même après mi-usure. Avec une telle pointe (12), la durée d'utilisation du soc (11) est bien plus importante et l'utilisation du matériel (pointe (12) - soc (11)) est bien meilleure. D'une manière connue, la pointe (12) est aussi amenée à protéger le contresep (10) pour que son usure soit plus lente et plus régulière. La pointe (12) est donc montée, décalée latéralement, pour que le tranchant latéral (14) protège le contresep (10).

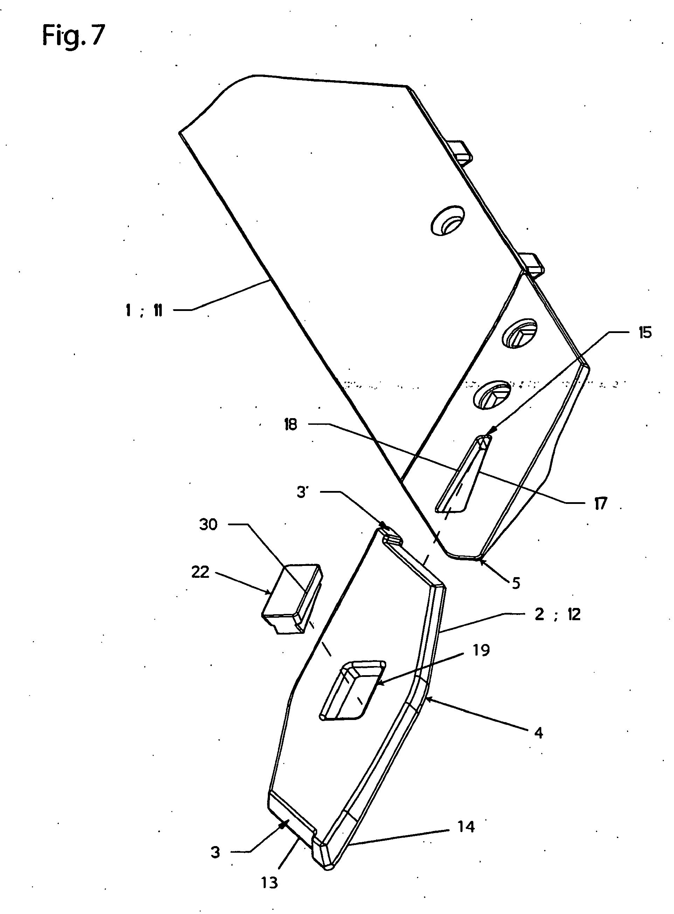

Les figures 7 et 8 représentent un outil de travail (1) selon un autre exemple de réalisation. La pièce d'usure (2) est fixée sur l'outil (1) par l'intermédiaire d'un moyen de fixation (22) composé d'une seule pièce en forme de T. Ce moyen de fixation (22) présente également une première partie (23) et une seconde partie (24). La première partie (23) coopère avec la rainure (15) et la seconde partie (24) coopère et est complémentaire à la découpe (19). En raison des formes et orientations différentes des première et seconde parties (23, 24), il n'est pas possible de se tromper lors du montage du moyen de fixation (22). Ce moyen de fixation (22) est indispensable pour la fixation de la pièce d'usure (2) sur l'outil de travail (1).

A la lumière des figures 7 et 8, le moyen de fixation (22) présente une forme générale de T. La largeur de la seconde partie (24) est plus importante que la largeur de la première partie (23). Ainsi, de part et d'autre de la première partie (23), le moyen de fixation (22) comporte deux surfaces d'appui (30). Ces deux surfaces d'appui (30) permettent notamment au moyen de fixation (22) de s'appuyer sur l'outil (1) lors du montage. Grâce à ces surfaces d'appui (30), le moyen de fixation (22) ne passe pas au travers de la rainure (15).

Lorsque la pièce d'usure (2) est bloquée par le moyen de fixation (22), la fixation peut alors faire face aux efforts de travail mais aussi aux chocs divers pouvant être générés par des éléments comme des pierres. La rainure (15) est positionnée sur l'outil (1) de manière à ce que lorsque la pièce d'usure (2) est montée, elle puisse aussi protéger le contresep (10) pour que son usure soit plus lente et plus régulière.

La découpe (19) présente deux faces (20, 21) inclinées par rapport à la verticale de manière à former ensemble un V avec une convergence vers l'arrière. Ces deux faces (20, 21) sont avantageusement inclinées d'un troisième angle (γ) l'une par rapport à l'autre. Ce troisième angle (γ) est compris entre 10° et 30°. La seconde partie (24) du moyen de fixation (22) présente une forme complémentaire à la découpe (19). L'axe longitudinal de la découpe (19) est avantageusement confondu avec le plan vertical médian de la pièce d'usure (2). Cet axe longitudinal étant avantageusement disposé dans un plan sensiblement parallèle au tranchant latéral (14) de la pièce d'usure (2). La découpe (19) présente une forme de quadrilatère et avantageusement une forme de rectangle. D'une manière avantageuse, la seconde partie (24) est avantageusement noyée dans la découpe (19) de la pièce d'usure (2). La face supérieure de la seconde partie (24) est sensiblement plane. De cette manière, elle n'est pas détériorée par les frottements de la terre et l'écoulement de la terre n'est pas entravé. Dans l'exemple de réalisation des figures 5 et 6, la découpe (19) en forme de perçage conique présente aussi un troisième angle (γ) sensiblement compris entre 10° et 30°.

Pour protéger l'outil (1), il est nécessaire de fixer une pièce d'usure (2) sur ce dernier. La pièce d'usure (2) est maintenue et est bloquée sur l'outil (1) par l'intermédiaire d'un moyen de fixation (22). Ces différents éléments sont décrits précédemment. Dans une première étape, on assemble le moyen de fixation (22) dans la découpe (19) de la pièce d'usure (2). La forme de la découpe (19) et celle de la seconde partie (24) sont complémentaires. Les deux faces (20, 21) inclinées du troisième angle (γ) de la découpe (19) permettent au moyen de fixation (22) de ne pas glisser au travers de la découpe (19). Dans une deuxième étape, l'ensemble moyen de fixation (22) et pièce d'usure (2) vont être montés sur l'outil (1). Ainsi, la première partie (23) du moyen de fixation (22) est insérée dans la rainure (15) de l'outil (1) au niveau de son extrémité avant. On déplace alors l'ensemble (2 - 22) dans le sens opposé à la direction de travail (A) et sensiblement vers le haut pour que la première partie (23) s'engage dans la rainure (15) qui est convergente. La première partie (23) vient alors en contact avec les parois latérales (17, 18) qui guident ce mouvement de translation dans le sens opposé à la direction de travail (A) ainsi que vers l'avant. A ce moment, les surfaces d'appui (30) sont en contact avec l'outil (1). Pour que la pièce d'usure (2) soit bloquée sur l'outil (1), il faut que le moyen de fixation (22) recule dans la rainure (15). Ce recul génère le soulèvement du moyen de fixation (22) suivant les faces inclinées (17, 18) du deuxième angle (β). Ce soulèvement entraîne des efforts au niveau des faces (20, 21) inclinées du troisième angle (γ) qui exercent un effort de traction sur la pièce d'usure (2). Cet effort de traction plaque alors la pièce d'usure (2) de façon immobile et durable sur l'outil (1). Tous les mouvements de translation et de rotation selon les trois axes de référence (x, y, z) de la pièce d'usure (2) sont bloqués. Lorsque la pièce d'usure (2) est bloquée, les surfaces d'appui (30) ne sont plus en contact avec l'outil (1). Cette fixation est par conséquent facile à mettre en oeuvre, rapide et durable. La fixation de la pièce d'usure (2) est sécurisée sur l'outil (1) par un coup de marteau dans le sens de montage. Le sens de montage étant le sens inverse de la direction de travail (A).

Dans l'exemple de réalisation représenté sur la figure 7, les deux tranchants (13, 14) forment un angle d'environ 50° l'un par rapport à l'autre. Le soc (11) est avantageusement réalisé en deux parties.

A la lumière de la figure 1, on remarque aussi qu'une telle fixation est également envisageable et est adaptée pour une pointe non réversible.

Selon un autre exemple de réalisation non représenté, la première paroi latérale (17) de la rainure (15) est positionnée indifféremment sur le soc (11) par rapport à la direction de travail (A). La première paroi latérale (17) n'est pas sensiblement parallèle à la direction d'avance (A).

D'une manière généralement connue de l'homme de l'art, les charrues comportent plusieurs corps de labour (7) qui sont disposés l'un derrière l'autre et le corps de labour (7) via le sep (8) est fixé au bâti d'une charrue par l'intermédiaire d'un age. Un tel soc (11) peut être fixé sur tout type de charrue, à savoir notamment une charrue simple ou une charrue réversible, tractée, portée ou semi-portée. La pointe (12) de soc est remplacée lorsque cette dernière est usée ou endommagée.

Différents exemples de réalisation de corps de labour d'une charrue comportant un soc (11) et une pointe (12) selon l'invention ont été décrit dans la présente description. D'une manière plus générale, cette invention s'adresse aussi à d'autres matériels destinés à travailler le sol dans les travaux publics ou dans les machines agricoles de préparation de lits de semences, ... On ne se limitera donc pas à la désignation d'un soc (11) et d'une pointe (12) mais plus généralement à celle d'un outil de travail (1) et d'une pièce d'usure (2). L'outil de travail (1) est destiné à travailler dans le sol et est protégé d'une usure importante par une pièce d'usure (2) conformément à la présente invention.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection.

## Revendications

1. Outil (1, 11) protégé par une pièce d'usure (2 ; 12), ladite pièce d'usure (2; 12) présentant une partie active (3, 3') et une partie de liaison (4), ledit outil (1 ; 11) présente une partie frontale (5) comportant à l'avant une rainure (15) disposée transversalement, ladite rainure (15) est symétrique par rapport à son axe longitudinal (16), que ladite pièce d'usure (2 ; 12) est fixée sur ledit outil (1 ; 11) par l'intermédiaire d'un moyen de fixation (22), ledit moyen de fixation (22) présente une surface d'appui (30) et lorsque la pièce d'usure (2 ; 12) est montée sur l'outil de travail (1 ; 11), ladite surface d'appui (30) n'est plus en contact avec ledit outil de travail (1 ; 11), **caractérisé en ce** le moyen de fixation (22) est destiné à être engagé dans ladite rainure (15) par coincement.

2. Outil de travail selon la revendication 1, ***caractérisé en ce* que** ledit moyen de fixation (22) présente deux parties (23, 24), une première partie (23) qui coopère avec ladite rainure (15) dudit outil (1 ; 11) et une seconde partie (24) qui coopère avec ladite pièce d'usure (2 ; 12).

3. Outil de travail selon la revendication 1 ou 2, ***caractérisé en ce* que** ledit moyen de fixation (22) est composé d'une seule pièce qui présente une forme de T.

4. Outil de travail selon l'une quelconque des revendications 1 à 3, ***caractérisé en ce* que** ledit moyen de fixation (22) est composé de deux pièces distinctes, une première partie (23) en forme de coin dans laquelle est ménagée une boutonnière (25) et une seconde partie (24) en forme de pion avec une gorge (26) destinée à être insérée dans ladite boutonnière (25).

5. Outil selon l'une quelconque des revendications 1 à 4, ***caractérisé en ce* que** la forme de ladite rainure (15) et la forme dudit moyen de fixation (22) sont correspondantes, elles sont convergentes d'un premier angle (a).

6. Outil de travail selon l'une quelconque des revendications 1 à 5, ***caractérisé en ce* que** ladite rainure (15) présente deux parois latérales (17, 18) inclinées d'un deuxième angle (β) par rapport à la verticale de manière à former ensemble un V avec une convergence vers l'avant.

7. Outil de travail selon l'une quelconque des revendications 1 à 6, ***caractérisé en ce* que** ladite pièce d'usure (2, 12) comporte une découpe (19) présentant deux faces (20, 21) sensiblement parallèles qui sont inclinées d'un troisième angle (γ) par rapport à la verticale de manière à former ensemble un V avec une convergence vers l'arrière et que ladite découpe (19) est destinée à recevoir ledit moyen de fixation (22).

8. Outil de travail selon l'une quelconque des revendications 1 à *7,* ***caractérisé en ce* que** le plan vertical médian passant par l'axe longitudinal (16) de ladite rainure (15) est sensiblement parallèle à la direction de travail (A).

9. Corps de labour (7) comportant notamment un soc de charrue (11) protégé par une pointe (12), ***caractérisé en ce* que** le soc (11) correspond audit outil de travail (1) et que la pointe (12) correspond à ladite pièce d'usure (2) selon l'une quelconque des revendications 1 à 8.

10. Charrue ***caractérisée en ce* qu'**elle comporte au moins un corps de labour (7) selon la revendication 9.

## Claims

1. Tool (1, 11) protected by a wear part (2; 12), the said wear part (2; 12) having an active part (3, 3') and a connecting part (4), the said tool (1; 11) has a front part (5) comprising at the front a groove (15) arranged transversely, the said groove (15) is symmetrical with respect to its longitudinal axis (16), the said wear part (2; 12) is fixed on the said tool (1; 11) by a fixing means (22), the said fixing means (22) has a support surface (30) and when the wear part (2; 12) is mounted on the working tool (1; 11), the said support surface (30) is no longer in contact with the said work tool (1; 11), ***characterized in* that** the fixing means (22) is intended to be engaged in the said groove (15) by wedging.

2. Work tool according to Claim 1, ***characterized in* that** the said fixing means(22) has two parts (23, 24), a first part (23) which cooperates with the said groove (15) of the said tool (1; 11), and a second part (24) which cooperates with the said wear part (2; 12).

3. Work tool according to Claim 1 or 2, ***characterized in* that** the said fixing means (22) is composed of a single piece which has a T-shape.

4. Work tool according to any one of Claims 1 to 3, ***characterized in* that** the said fixing means (22) is composed of two distinct parts, a first part (23) in the form of a wedge in which a buttonhole (25) is arranged, and a second part (24) in the form of a pin with a slot (26) intended to be inserted in the said buttonhole (25).

5. Tool according to any one of Claims 1 to 4, ***characterized in* that** the shape of the said groove (15) and the shape of the said fixing means (22) are correspondent, they are convergent by a first angle (α).

6. Work tool according to any one of Claims 1 to 5, ***characterized in* that** the said groove (15) has two lateral walls (17, 18) inclined by a second angle (β) with respect to the vertical, so as to form together a V with a convergence towards the front.

7. Work tool according to any one of Claims 1 to 6, ***characterized in* that** the said wear part (2; 12) comprises a cutout (19) having two substantially parallel faces (20, 21) which are inclined by a third angle (γ) with respect to the vertical so as to form together a V with a convergence towards the rear and that the said cutout (19) is intended to receive the said fixing means (22).

8. Work tool according to any one of Claims 1 to 7, ***characterized in* that** the median vertical plane passing through the longitudinal axis (16) of the said groove (15) is substantially parallel to the work direction (A).

9. Plough body (7) comprising in particular a ploughshare (11) protected by a point (12), ***characterized in* that** the ploughshare (11) corresponds to the said work tool (1) and that the point (12) corresponds to the said wear part (2) according to any one of Claims 1 to 8.

10. Plough ***characterized in* that** is comprises at least one plough body (7) according to Claim 9.

## Patentansprüche

1. Werkzeug (1; 11), das durch ein Verschleißstück (2; 12) geschützt ist, wobei das Verschleißstück (2; 12) einen aktiven Teil (3, 3') und einen Verbindungsteil (4) aufweist, wobei das Werkzeug (1; 11) einen vorderen Teil (5) aufweist, der vorne eine quer angeordnete Nut (15) umfasst, wobei die Nut (15) bezüglich seiner Längsachse (16) symmetrisch ist, das Verschleißstück (2; 12) ist auf dem Werkzeug (1; 11) mittels eines Befestigungsmittels (22) befestigt, das Befestigungsmittel (22) weist eine Stützfläche (30) auf und wenn das Verschleißstück (2; 12) auf dem Arbeitswerkzeug (1; 11) montiert ist, ist die Stützfläche (30) nicht mehr mit dem Arbeitswerkzeug (1; 11) in Kontakt, ***dadurch gekennzeichnet,* dass** das Befestigungsmittel (22) dazu bestimmt ist, in die Nut (15) durch Festklemmen einzugreifen.

2. Arbeitswerkzeug nach Anspruch 1, ***dadurch gekennzeichnet,* dass** das Befestigungsmittel (22) zwei Teile (23, 24) aufweist, einen ersten Teil (23), der mit der Nut (15) des Werkzeugs (1; 11) zusammenwirkt, und einen zweiten Teil (24), der mit dem Verschleißteil (2; 12) zusammenwirkt.

3. Arbeitswerkzeug nach Anspruch 1 oder 2, ***dadurch gekennzeichnet,* dass** das Befestigungsmittel (22) aus einem Stück besteht, das eine T-Form aufweist.

4. Arbeitswerkzeug nach irgend einem der Ansprüche 1 bis 3, ***dadurch gekennzeichnet,* dass** das Befestigungsmittel (22) aus zwei getrennten Teilen besteht, einem ersten Teil (23) in Form eines Keils, in dem eine längliche Aussparung (25) vorgesehen ist, und einem zweiten Teil (24) in Form eines Stiftes mit einer Rille (26), die dazu bestimmt ist, in die längliche Aussparung (25) eingesetzt zu werden.

5. Werkzeug nach irgend einem der Ansprüche 1 bis 4, ***dadurch gekennzeichnet,* dass** die Form der Nut (15) und die Form des Befestigungsmittels (22) entsprechend und in einem ersten Winkel (α) konvergierend sind.

6. Arbeitswerkzeug nach irgend einem der Ansprüche 1 bis 5, ***dadurch gekennzeichnet,* dass** die Nut (15) zwei Seitenwände (17, 18) aufweist, die um einen zweiten Winkel (β) zur Vertikalen geneigt sind, um gemeinsam ein V mit einer Konvergenz nach vorne zu bilden.

7. Arbeitswerkzeug nach irgend einem der Ansprüche 1 bis 6, ***dadurch gekennzeichnet,* dass** das Verschleißstück (2; 12) einen Ausschnitt (19) umfasst, der zwei im Wesentlichen parallele Seiten (20, 21) aufweist, die in einem dritten Winkel (γ) zur Vertikalen geneigt sind, um gemeinsam ein V mit einer Konvergenz nach hinten zu bilden, und dass der Ausschnitt (19) dazu bestimmt ist, das Befestigungsmittel (22) aufzunehmen.

8. Arbeitswerkzeug nach irgend einem der Ansprüche 1 bis 7, ***dadurch gekennzeichnet,* dass** die vertikale Mittelebene, die durch die Längsachse (16) der Nut (15) verläuft, im Wesentlichen parallel zur Arbeitsrichtung (A) ist.

9. Pflugkörper (7) mit insbesondere einer Pflugschar (11), die durch eine Spitze (12) geschützt ist, ***dadurch gekennzeichnet,* dass** die Pflugschar (11) dem Arbeitswerkzeug (1) entspricht, und dass die Spitze (12) dem Verschleißstück (2) nach irgend einem der Ansprüche 1 bis 8 entspricht.

10. Pflug, ***dadurch gekennzeichnet,* dass** er mindestens einen Pflugkörper (7) nach Anspruch 9 umfasst.
